# EUROPEAN PATENT SPECIFICATION

(11) **EP 3 784 532 B1**
(45) Date of publication and mention of the grant of the patent: **06.11.2024**
(21) Application number: 18916718.2
(22) Date of filing: 14.12.2018
(51) Int. Cl.: B60R 19/52, B60K 11/08

(54) **ACTIVE GRILL SHUTTER WITH VANE PROTECTION STRUCTURE**
AKTIVER GRILLVERSCHLUSS MIT SCHAUFELSCHUTZSTRUKTUR
VOLET DE GRILLE ACTIVE AVEC STRUCTURE DE PROTECTION D'AUBE

(30) Priority: 23.04.2018 CN 201820581284 U
(43) Date of publication of application: 03.03.2021
(73) Proprietor: Yanfeng Plastic Omnium Automotive Exterior Systems Co., Ltd., Shanghai 201805 (CN); OPmobility SE, 69007 Lyon (FR)
(72) Inventor: GUI, Xiaogang, Shanghai 201805 (CN); DU, Chunhuan, Shanghai 201805 (CN)
(74) Representative: LLR
(86) International application number: PCT/CN2018/121174
(87) International publication number: WO 2019/205664

(56) References cited:
- EP-A1- 3 210 811
- EP-A1- 3 643 551
- WO-A1-2018/029655
- WO-A1-2018/067288
- CN-U- 204 123 952
- CN-U- 204 775 095
- CN-U- 206 615 186
- CN-U- 208 085 650
- DE-A1- 102012 209 074
- JP-A- 2009 083 740
- KR-A- 20160 057 632
- US-A1- 2013 264 047
- US-A1- 2014 295 749
- US-A1- 2014 308 890
- US-A1- 2015 090 508

## Description

### Field of the Invention

The present invention involves the technical field of automobile parts, particularly an active grill shutter ("AGS") with a vane protection structure.

### Background

An AGS such as that described in the document DE102012209074A1 is often used for vehicle. As is well known, when a car moves at a high speed, the torque required for manipulating a grill shutter is very large. Therefore, how to efficiently transmit an effective torque and to reduce the torque required for rotating vanes appear to be very necessary. To reduce fuel consumption and CO₂ emission, currently, utilization of an AGS is more and more common. However, as the vanes of an AGS are not protected from over-rotating, they can deform when they over-rotate. Sealing requirement between deformed vanes cannot be achieved. Currently, in order to solve this problem, usually one improves manufacturing precision and reduces the rotation angle of the electrical motor, but without providing any protection against over-rotation of vanes. As a result, vanes may still deform when they over-rotate, which affects sealing between the vanes and increases the possibility of leakage, preventing the AGS from performing its function.

### Summary of the Invention

To solve the problem of deformation of an AGS's vanes, the present invention provides an AGS with a vane protection structure.

To this end, the subject of the invention is an active grill shutter comprising a vane, an electrical motor and a grill body, the vane being provided with a positioning tab and a rotation shaft that are fixedly connected, the electrical motor driving the positioning tab and the rotation shaft to rotate in a synchronized manner, so as to drive the vane altogether to rotate, the grill body being provided with a set of limiting ribs that limit the rotation angle of the positioning tab, the set of limiting ribs comprising an abutment edge, the active grill shutter further comprising a vane protection structure which is a set of weakening holes provided on the positioning tab or a set of weakening grooves provided on the abutment edge, and which is capable of deforming so as to absorb the energy produced by a collision between the vane and the grill body.

Preferably, the set of limiting ribs comprises a first limiting rib and a second limiting rib, the first limiting rib comprising the abutment edge, the positioning tab being located between the abutment edge and the second limiting rib.

Preferably, the set of weakening holes are circular through-holes, preferably three circular through-holes.

Preferably, inside the abutment edge are provided criss-cross oblique threads. Thus, the strength of the abutment edge is reinforced by means of the criss-cross oblique threads.

Preferably, the set of weakening grooves are two linear grooves.

Preferably, the set of weakening grooves are located on the side of the abutment edge that is further away from the positioning tab.

Preferably, inside the abutment edge are provided oblique threads, which weaken the strength of the abutment edge.

Preferably, the vane is provided with a latch structure, and the rotation shaft and the latch structure are fixedly arranged on the two sides of the positioning tab, wherein, the latch structure is connected with the electrical motor.

The active grill shutter provided by the present invention is of a simple structure, will not increase manufacturing cost, and absorbs the energy produced by the collision between the vane and the grill body by means of the deformation of the protection structure itself.

### Description of the Drawings

Figure 1 is an AGS with a vane protection structure according to a preferred embodiment of the present invention;
Figure 2 is a partial schematic view of the structure of the vane of Figure 1;
Figure 3 shows the connection between a vane and an electrical motor;
Figure 4 shows a schematic view of a vane protection structure;
Figure 5 is a schematic view of a vane protection structure in another preferred embodiment; and
Figure 6 is a front view of a vane protection structure in the another preferred embodiment.

### Detailed Description of Preferred Embodiments

The technical solution of the present invention is described in detail below in reference to specific modes of realization of the present invention. However, the embodiments described below are merely used to understand the present invention, and cannot limit the present invention. The embodiments of the present invention and their characteristics can be combined with each other. The present invention can be implemented in many different ways defined and covered by the claims.

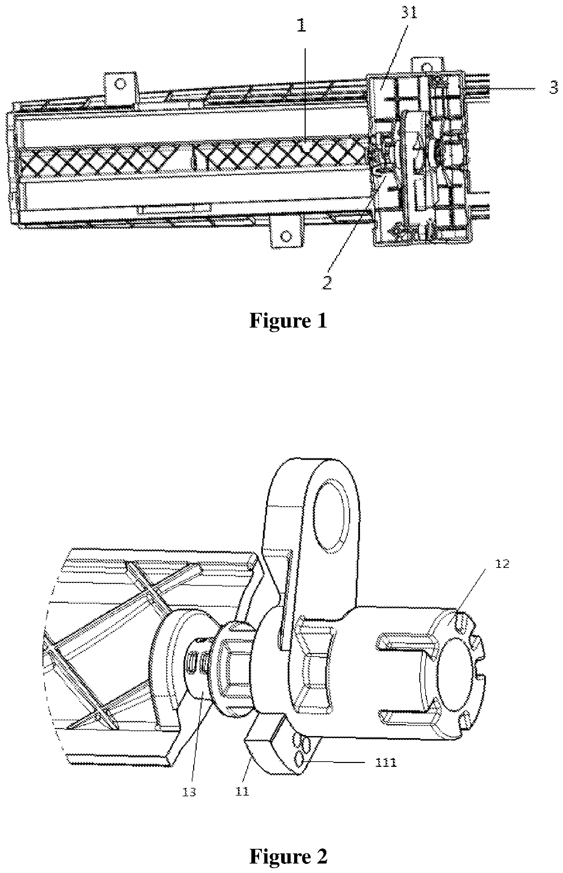

An active grill shutter ("AGS") with a vane protection structure provided according to the present invention comprises vanes 1, an electrical motor 2, and a grill body 3. The electrical motor 2 is connected with the vanes 1 to drive the vanes 1 to rotate, and the grill body 3 is provided with a protective housing 31 that houses the electrical motor and part of the vanes 1, as shown in Figure 1.

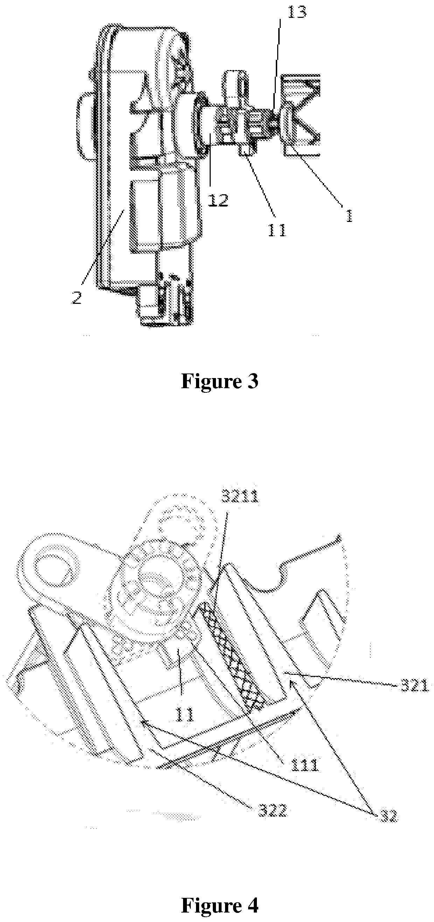

Specifically, as shown in Figure 2, the vanes 1 are provided with a rotation shaft 13, a positioning tab 11, and a latch structure 12 that are sequentially fixedly connected. The latch structure 12 cooperates with the output end of the electrical motor 2. That is, as shown in Figure 3, the electrical motor 2 delivers a torque through the latch structure 12 to drive the positioning tab 11 and the rotation shaft 13 to rotate in a synchronized manner, so as to drive the vanes 1 altogether to rotate. In reference to Figure 4, the grill body 3 is provided with a set of limiting ribs 32 comprising a first limiting rib 321 and a second limiting rib 322. The first limiting rib 321 comprises an abutment edge 3211. In an assembled state, the positioning tab 11 of the vanes 1 is located between the abutment edge 3211 and the second limiting rib 322. A set of weakening holes 111 composed of three circular through-holes are provided on the positioning tab 11. Inside the abutment edge 3211 are provided criss-cross oblique threads to reinforce the strength of the abutment edge 3211. When the torque delivered by the electrical motor 2 is excessive, the positioning tab 11 impacts the abutment edge 3211, causing the set of weakening holes 111 to deform along the direction opposite to the direction of the impact. That is, the portion with the holes crumples and performs the functions of absorbing energy, buffering, and preventing the vanes 1 from over-rotating.

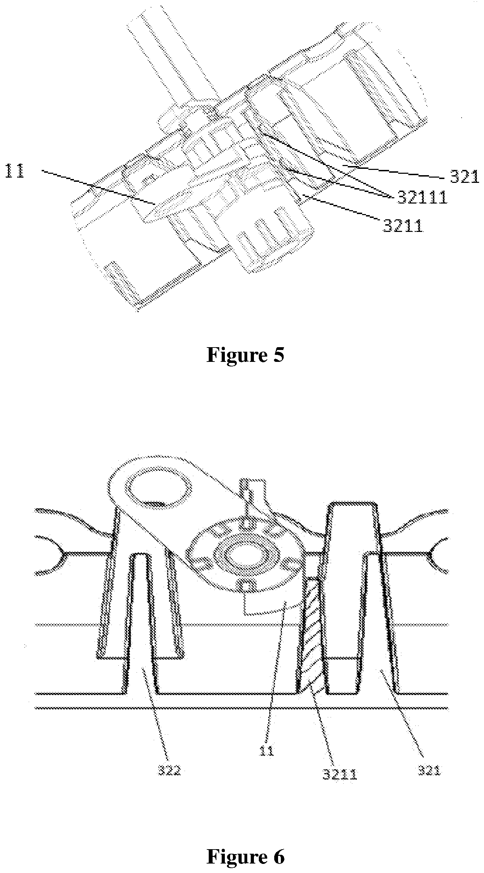

In another preferred embodiment, as shown in Figures. 5-6, inside the abutment edge 3211 are provided criss-cross oblique threads to weaken the strength of the abutment edge, and the abutment edge 3211 is provided with a set of weakening grooves 32111 on its side that is further away from the positioning tab 11. The set of weakening grooves 32111 comprise two linear grooves arranged in parallel. When the torque delivered by the electrical motor 2 is excessive, the positioning tab 11 touches the abutment edge 3211, causing the set of weakening grooves 321111 to deform along the rotation direction of the vanes 1. That is, the portion with the grooves crumples and performs the functions of absorbing energy, buffering, and preventing the vanes 1 from over-rotating.

What has been described above are merely relatively preferred embodiments of the present invention, and are not intended to limit the scope of the present invention. The embodiments of the present invention described in the description can be subject to various modifications in accordance with the appended claims.

## Claims

1. An active grill shutter, comprising a vane (1), an electrical motor (2) and a grill body (3), the vane (1) being provided with a positioning tab (11) and a rotation shaft (13) that are fixedly connected, the electrical motor (2) driving the positioning tab (11) and the rotation shaft (13) to rotate in a synchronized manner, so as to drive the vane (1) altogether to rotate, the grill body (3) being provided with a set of limiting ribs (32) that limit the rotation angle of the positioning tab (11), the set of limiting ribs (32) comprising an abutment edge (3211), **characterized in that** the active grill shutter further comprises a vane protection structure which is a set of weakening holes (111) provided on the positioning tab (11) or a set of weakening grooves (32111) provided on the abutment edge (3211), and which is capable of deforming so as to absorb the energy produced by a collision between the vane (1) and the grill body (3).

2. The active grill shutter according to claim 1, wherein the set of limiting ribs (32) comprises a first limiting rib (321) and a second limiting rib (322), the first limiting rib (321) comprising the abutment edge (3211), the positioning tab (11) being located between the abutment edge (3211) and the second limiting rib (322).

3. The active grill shutter according to claim 1, wherein the set of weakening holes (111) are circular through-holes, preferably three circular through-holes.

4. The active grill shutter according to claim 3, wherein inside the abutment edge (3211) are provided criss-cross oblique threads to reinforce the strength of the abutment edge (3211).

5. The active grill shutter according to claim 1, wherein the set of weakening grooves (32111) are located on the side of the abutment edge (3211) that is further away from the positioning tab (11).

6. The active grill shutter according to claim 1, wherein the set of weakening grooves (32111) are two linear grooves.

7. The active grill shutter according to claim 5, wherein inside the abutment edge (3211) are provided oblique threads to weaken the strength of the abutment edge (3211).

8. The active grill shutter according to any one of precedent claims, wherein the vane (1) is provided with a latch structure (12), the rotation shaft (13) and the latch structure (12) are fixedly arranged on the two sides of the positioning tab (11), and the latch structure (12) is connected with the electrical motor (2).

## Patentansprüche

1. Aktiver Kühlergrillverschluss, der einen Flügel (1), einen Elektromotor (2) und einen Kühlergrillkörper (3) aufweist, wobei der Flügel (1) mit einer Positionierungslasche (11) und einer Drehwelle (13) versehen ist, die fest verbunden sind, wobei der Elektromotor (2) die Positionierungslasche (11) und die Drehwelle (13) synchronisiert antreibt, um den Flügel (1) insgesamt in Drehung zu versetzen, wobei der Kühlergrillkörper (3) mit einem Satz von Begrenzungsrippen (32) versehen ist, die den Drehwinkel der Positionierungslasche (11) begrenzen, der Satz von Begrenzungsrippen (32) eine Anschlagkante (3211) aufweist, **dadurch gekennzeichnet, dass** der aktive Kühlergrillverschluss außerdem eine Flügelschutzstruktur aufweist, die ein Satz von Schwächungslöchern (111) ist, die auf der Positionierungslasche (11) vorgesehen sind, oder ein Satz von Schwächungsrillen (32111), die auf der Anschlagkante (3211) vorgesehen sind, und die in der Lage ist, sich zu verformen, um die Energie zu absorbieren, die durch eine Kollision zwischen dem Flügel (1) und dem Kühlergrillkörper (3) erzeugt wird.

2. Aktiver Kühlergrillverschluss nach Anspruch 1, wobei der Satz von Begrenzungsrippen (32) eine erste Begrenzungsrippe (321) und eine zweite Begrenzungsrippe (322) aufweist, wobei die erste Begrenzungsrippe (321) die Anschlagkante (3211) aufweist und die Positionierungslasche (11) zwischen der Anschlagkante (3211) und der zweiten Begrenzungsrippe (322) angeordnet ist.

3. Aktiver Kühlergrillverschluss nach Anspruch 1, wobei der Satz von Schwächungslöchern (111) kreisförmige Durchgangslöcher, vorzugsweise drei kreisförmige Durchgangslöcher, sind.

4. Aktiver Kühlergrillverschluss nach Anspruch 3, wobei im Inneren der Anschlagkante (3211) kreuz und quer verlaufende schräge Streifen vorgesehen sind, um die Festigkeit der Anschlagkante (3211) zu verstärken.

5. Aktiver Kühlergrillverschluss nach Anspruch 1, wobei sich der Satz von Schwächungsrillen (32111) auf der Seite der Anschlagkante (3211) befindet, die weiter von der Positionierungslasche (11) entfernt ist.

6. Aktiver Kühlergrillverschluss nach Anspruch 1, wobei der Satz von Schwächungsrillen (32111) zwei lineare Rillen sind.

7. Aktiver Kühlergrillverschluss nach Anspruch 5, wobei innerhalb der Anschlagkante (3211) schräge Streifen vorgesehen sind, um die Festigkeit der Anschlagkante (3211) zu schwächen.

8. Aktiver Kühlergrillverschluss nach einem der vorhergehenden Ansprüche, wobei der Flügel (1) mit einer Verriegelungsstruktur (12) versehen ist, die Drehwelle (13) und die Verriegelungsstruktur (12) fest auf den beiden Seiten der Positionierungslasche (11) angeordnet sind und die Verriegelungsstruktur (12) mit dem Elektromotor (2) verbunden ist.

## Revendications

1. Calandre à volets actifs, comprenant un volet (1), un moteur électrique (2) et un corps de grille (3), le volet (1) étant pourvu d'une languette de positionnement (11) et d'un arbre de rotation (13) qui sont reliés de manière fixe, le moteur électrique (2) entraînant la languette de positionnement (11) et l'arbre de rotation (13) à tourner de manière synchrone, de façon à entraîner le volet (1) à tourner dans son ensemble, le corps de grille (3) étant pourvu d'un ensemble de nervures de limitation (32) qui limitent l'angle de rotation de la languette de positionnement (11), l'ensemble de nervures de limitation (32) comprenant un bord de butée (3211), **caractérisé en ce que** l'calandre à volets actifs comprend en outre une structure de protection du volet qui est un ensemble de trous affaiblissants (111) prévus sur la languette de positionnement (11) ou un ensemble de rainures affaiblissantes (32111) prévues sur le bord de butée (3211), et qui est capable de se déformer de manière à absorber l'énergie produite par une collision entre le volet (1) et le corps de grille (3).

2. Calandre à volets actifs selon la revendication 1, dans lequel l'ensemble de nervures de limitation (32) comprend une première nervure de limitation (321) et une seconde nervure de limitation (322), la première nervure de limitation (321) comprenant le bord de butée (3211), la languette de positionnement (11) étant située entre le bord de butée (3211) et la seconde nervure de limitation (322).

3. Calandre à volets actifs selon la revendication 1, dans lequel l'ensemble des trous affaiblissants (111) sont des trous traversants circulaires, de préférence trois trous traversants circulaires.

4. Calandre à volets actifs selon la revendication 3, dans lequel à l'intérieur du bord de butée (3211) sont prévues des nervures diagonales croisées pour renforcer la résistance du bord de butée (3211).

5. Calandre à volets actifs selon la revendication 1, dans lequel l'ensemble des rainures affaiblissantes (32111) est situé sur le côté du bord de butée (3211) qui est plus éloigné de la languette de positionnement (11).

6. Calandre à volets actifs selon la revendication 1, dans lequel l'ensemble des rainures affaiblissantes (32111) sont deux rainures linéaires.

7. Calandre à volets actifs selon la revendication 5, dans lequel à l'intérieur du bord de butée (3211) sont prévues des nervures diagonales pour affaiblir la résistance du bord de butée (3211).

8. Calandre à volets actifs selon l'une quelconque des revendications précédentes, dans lequel le volet (1) est pourvu d'une structure de verrou (12), l'arbre de rotation (13) et la structure de verrou (12) sont disposés de manière fixe sur les deux côtés de la languette de positionnement (11), et la structure de verrou (12) est reliée au moteur électrique (2).
